# EUROPÄISCHE PATENTSCHRIFT

(11) **EP 0 572 588 B1**
(45) Veröffentlichungstag und Bekanntmachung des Hinweises auf die Patenterteilung: **12.03.1997**
(21) Anmeldenummer: 92923678.4
(22) Anmeldetag: 26.11.1992
(51) Int. Cl.: H02J 7/14

(54) **VORRICHTUNG ZUR REGELUNG EINES GENERATORS**
DEVICE FOR REGULATING A GENERATOR
DISPOSITIF DE REGULATION D'UN GENERATEUR

(30) Priorität: 18.12.1991 DE 4141837
(43) Veröffentlichungstag der Anmeldung: 08.12.1993
(73) Patentinhaber: ROBERT BOSCH GMBH, 70442 Stuttgart (DE)
(72) Erfinder: SCHRAMM, Guenter, D-7143 Vaihingen-Enzweihingen (DE); KOHL, Walter, D-7120 Bietigheim (DE); MEYER, Friedhelm, D-7132 Illingen (DE); MITTAG, Rainer, D-7014 Kornwestheim (DE); SUELZLE, Helmut, D-7149 Freiberg (DE)
(86) Internationale Anmeldenummer: DE9200985
(87) Internationale Veröffentlichungsnummer: WO9312568

(56) Entgegenhaltungen:
- EP-A- 0 462 503
- WO-A-90/07217
- WO-A-92/10019
- FR-A- 2 550 398
- US-A- 5 079 716

## Beschreibung

### Stand der Technik

Die Erfindung geht aus von einer Vorrichtung zur Regelung eines Generators.

Zur Energieversorgung eines Kraftfahrzeuges werden heute überwiegend Drehstrom-Generatoren verwendet, die eine Wechselspannung erzeugen, welche in einer nachgeschalteten Gleichrichteranordnung gleichgerichtet wird und zur Versorgung der Verbraucher sowie zum Aufladen der Batterie verwendet wird. Da die Ausgangsspannung des Generators erheblich von der Generatordrehzahl abhängt, wird zur Erzielung einer gewünschten konstanten Ausgangsspannung ein Spannungsregler verwendet, der den Erregerstrom des Generators so beeinflußt, daß die Generatorausgangsspannung trotz erheblich veränderlicher Generatordrehzahl einen konstanten Wert von beispielsweise 14 Volt einhält.

Da die Zahl der elektrischen Verbraucher im Kraftfahrzeug ständig weiter anwächst, werden die Anforderungen an die Generatoren immer größer. Besonders im Winter, wenn zusätzlich zu den üblichen Verbrauchern noch Scheibenheizungen eingeschaltet werden oder wenn das Fahrzeug über längere Zeit lediglich im Stadtverkehr, also bei niedrigen Drehzahlen betrieben wird, treten Probleme bei der Energieversorgung auf. Es wird daher versucht, die Stromabgabe von Drehstrom-Generatoren so zu steigern, daß die Ausgangsleistung der Generatoren bei gleichbleibender Spannung gesteigert wird.

Eine Möglichkeit, die Generatorleistung zu erhöhen, ist aus der DE-OS 31 42 878 bekannt. Bei diesem Vorschlag wird die Erregerwicklung mit einer gegenüber der Batteriespannung erhöhten Spannung versorgt. Dadurch wird die Stärke des Erregerstromes erhöht, wodurch ein wesentlich stärkeres Magnetfeld erzeugt wird, das bei sonst unveränderten Generatorabmessungen zu einer Steigerung der Generatorausgangsleistung führt. Der maximale Erregerstrom bzw. die maximale Durchflutung wird durch die thermischen Grenzwerte der Gleichrichterdioden bzw. des Ständers im Generator bestimmt. Wird, wie in der DE-OS 31 42 878 beschrieben, die Erregerwicklung mit einer gegenüber der Bordnetzspannung erhöhten Spannung betrieben, besteht die Gefahr, daß bei ungünstigen Betriebsbedingungen die thermisch zulässigen Grenzwerte überschritten werden.

Um dieses Problem zu lösen, wird in der DE-P 38 43 163 vorgeschlagen, bei einem Fahrzeug-Drehstrom-Generator zur optimalen Energieversorgung des Bordnetzes, den Erregerstrom unter bestimmten Bedingungen gegenüber dem Nennerregerstrom zu erhöhen. Durch eine Temperaturmessung im Regler und Anordnung des Reglers auf einem Generatorbauteil, das besonders warm wird, wird rechtzeitig erkannt, wann der thermische Grenzwert erreicht wird. Nach diesem Erkennen wird der Erregerstrom soweit reduziert, daß der thermische Grenzwert nicht überschritten wird. In der DE-P 38 43 163 wird jedoch nicht angegeben, wie die Erhöhung des Erregerstromes über den Nennerregerstrom bewerkstelligt werden soll.

Eine Weiterbildung der obengenannten Anmeldung stellt die nicht vorveröffentlichte EP-Anmeldung 0 462 503, die als Stand der Technik nach Artikel 54(3) EPÜ gilt, dar, deren Offenbarung in der folgenden Beschreibung wiederholt und um wesentliche Punkte erweitert wird.

### Vorteile der Erfindung

Die erfindungsgemäße Vorrichtung zur Regelung eines Generators hat gegenüber dem Bekannten den Vorteil, daß der Generator bei großer Leistungserfordernis in einem übererregten Bereich, bzw. in einem thermisch nicht unkritischen Zustand betrieben werden kann, wobei durch Temperaturmessung im Spannungsregler selbst sowie durch gegebenenfalls einleitbare Schutzmaßnahmen verhindert wird, daß der Generator, die Gleichrichterdioden oder der Spannungsregler infolge thermischer Überhitzung zerstört wird.

Durch die Verringerung des Widerstandes der Erregerwicklung oder durch Verwendung einer gegenüber der Bordnetzspannung erhöhten Spannung, ist es problemlos möglich, den Generator zeitweilig im übererregten Bereich zu betreiben.

In einer weiteren Ausgestaltung ist es möglich, die erfindungsgemäße Vorrichtung generell so auszulegen, daß sie auch bei Betrieb mit Nennerregerstrom bei einem Zusammentreffen ungünstiger Umstände, also beispielsweise besonders hohe Aussentemperaturen in Verbindung mit relativ geringer Generatordrehzahl und damit geringer Kühlung unerlaubt heiß würde und, damit in diesem Fall eine thermische Überlastung vermieden wird, mit einer Sicherheitseinrichtung zu versehen, die bei erkannter Übertemperatur oder kurz vor erreichen von Übertemperatur eine Verringerung des Erregerstromes einleitet.

Die erforderliche Temperaturermittlung wird dabei durch Temperaturmessung im Spannungsregler und durch Berechnung der Temperatur einzelner Elemente der Vorrichtung erfolgen, wobei es besonders vorteilhaft ist, zur Berechnung generator-, regler- oder fahrzeugtypische Parameter oder Kennfelder zu verwenden.

Diese Vorgehensweise entspricht der aus der Regelungstechnik allgemein bekannten Beobachter-Funktion, bei der ein Beobachter eine einer Messung gut zugängige Meßgröße ermittelt, so daß aus der ermittelten Meßgröße eine andere, der Messung schlechter zugängige Meßgröße bestimmt werden kann.

Aus der vom Beobachter ermittelten Temperatur am Spannungsregler, lassen sich die Temperaturen an anderer Stelle des Bordnetzes ebenfalls bestimmen, so daß bei Überschreiten einer oder mehrerer vorgebbarer Grenztemperaturen eine Reduzierung des Erregerstromes vorgenommen wird.

Ermittelt wird die Temperatur aus berechneten stationären Endtemperaturen, wobei unter der stationären Endtemperatur die Temperatur verstanden sei, die sich nach längerer Zeit einstellen würde, wenn keine Änderungen mehr erfolgen würden. Die Berechnung dieser Endtemperaturen erfolgt dabei unter Berücksichtigung möglichst vieler, ohnehin zur Verfügung stehender Meßwerte und Parameter zusätzliche Temperaturfühler sind nicht erforderlich, wodurch eine erhöhte Störsicherheit gegeben ist und die gesamte Anordnung kleiner, leichter und preiswerter wird.

Aus den ermittelten Endtemperaturen lassen sich die herrschenden Augenblickstemperaturen, die zur Erkennung des Erreichens einer Grenztemperatur benötigt werden, ableiten, ebenso sind die an verschiedenen Stellen zu erwartenden zeitlichen Temperaturverläufe ermittelbar. Dabei sind verschiedene Möglichkeiten denkbar, die sich auf die Erwärmung eines temperaturabhängigen Widerstandes und die damit gekoppelte Widerstandsänderung, auf die Erwärmung einer Halbleiterstrecke oder die Ausnutzung verschiedener thermischer Kopplungen beziehen, wählbar.

Durch die in den Unteransprüchen aufgeführten Maßnahmen sind vorteilhafte Weiterbildungen und Verbesserungen der im Hauptanspruch angegebenen Vorrichtung bzw. des Verfahrens zur Spannungsregelung möglich.

### Zeichnung

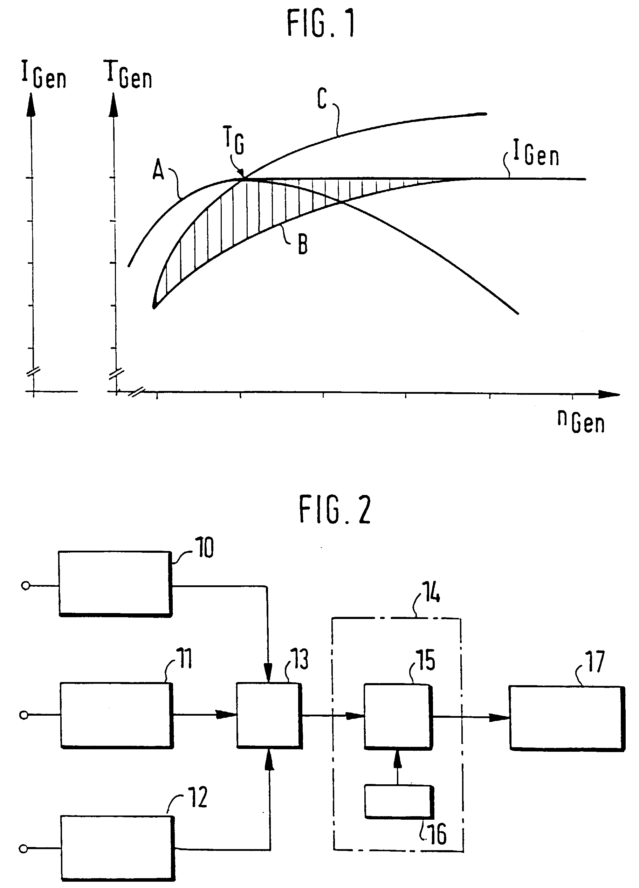

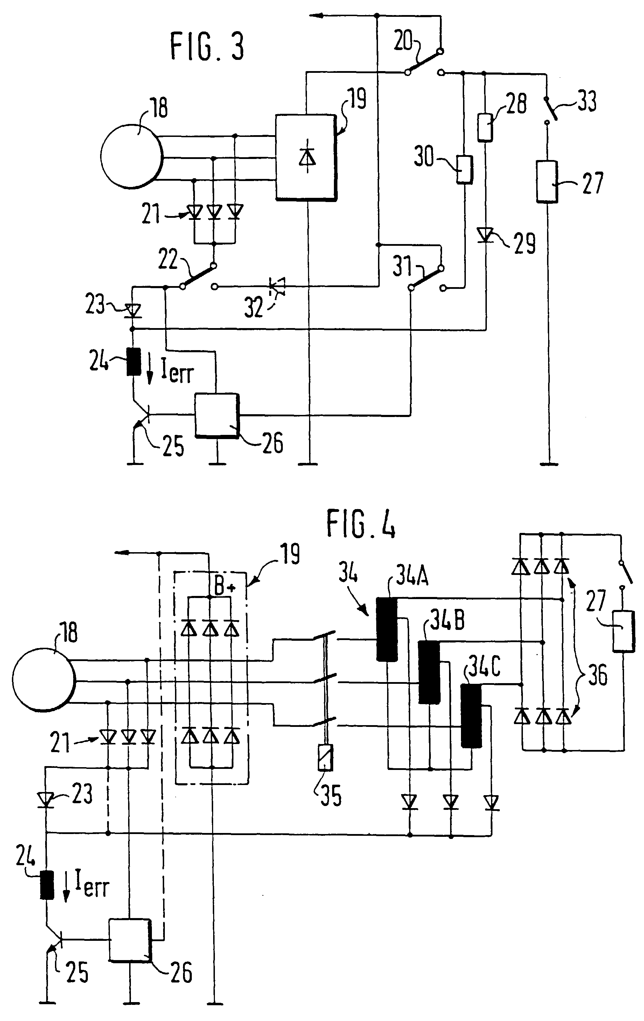

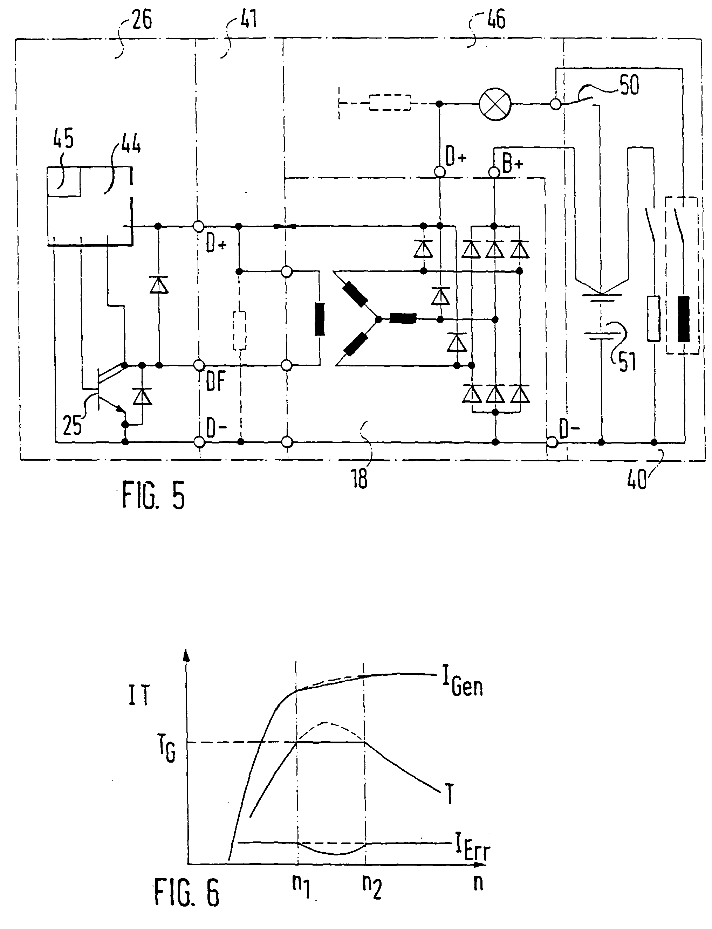

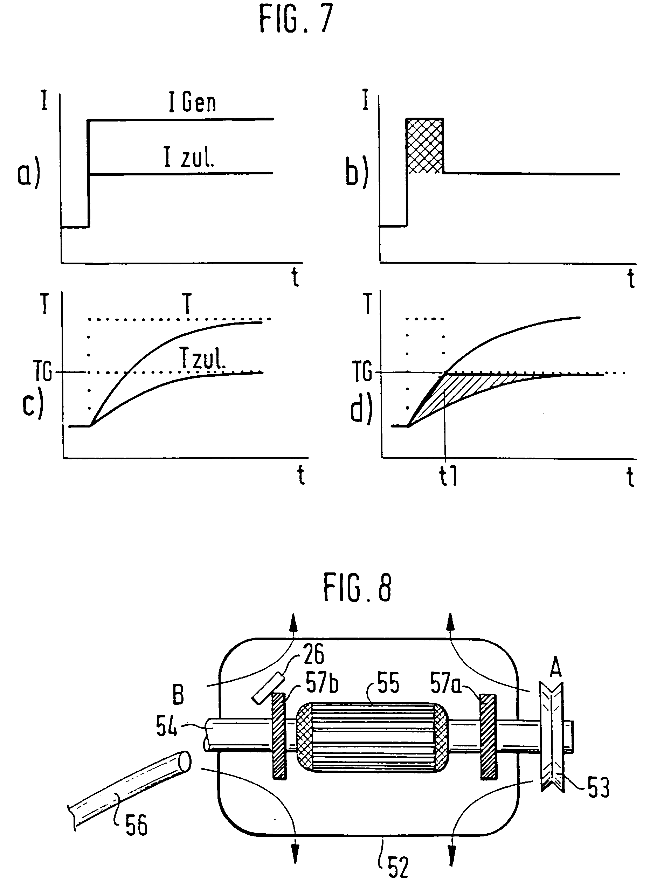

In Figur 1 ist der Zusammenhang zwischen der Generatortemperatur und der Generatordrehzahl bzw. des Generatorstromes und der Drehzahl für zwei verschiedene Erregerwicklungen dargestellt. Figur 2 zeigt eine erfindungsgemäße Einrichtung, mit der sichergestellt werden kann, daß der Erregerstrom bei Erreichen des thermischen Grenzwertes reduziert wird. In Figur 3 und 4 sind zwei Schaltungsbeispiele aufgezeigt, die eine Versorgung der Erregerwicklung mit einer gegenüber der Bordnetzspannung erhöhten Spannung gewährleisten, in Figur 5 ist das elektrische Schaltbild einer Generator-/ Spannungsregleranordnung dargestellt, bei der ein Betrieb mit erhöhtem Erregerstrom nicht vorgesehen ist, dafür ist jedoch eine Dimensionierung derart vorgesehen, daß unter ungünstigen Umständen eine zu hohe Temperatur auftreten könnte und Figur 6 zeigt den Zusammenhang zwischen Generatortemperatur, Erregerstrom und Drehzahl bei einem System nach Figur 5 und in Figur 7 sind Beispiele füe den Verlauf des Stromes und der Temperatur über der Zeit aufgetragen, Figur 8 skizziert schließlich das Innere eines Generators mit den verschiedenen Luftzirkulationen.

### Beschreibung

In Figur 1 zeigt Kurve A den Verlauf der Generatortemperatur T_{Gen.} über der Generatordrehzahl n_{Gen.} Die maximal auftretende Temperatur ist dabei abhängig von der Drehzahl, der Generatorbelastung und der Umgebungstemperatur. Die höchste Temperatur tritt üblicherweise bei relativ geringen Drehzahlen des Generators auf, da bei höheren Drehzahlen die Kühlleistung zunimmt.

Üblicherweise wird der Generator so ausgelegt, daß auch im ungünstigsten Fall eine maximal erlaubte Temperatur nicht überschritten wird. Es ist daher erforderlich, daß die Erregerwicklung einen so hohen Widerstand aufweist, daß bei der anliegenden Bordnetzspannung ein Erregerstrom fließt, der gewährleistet, daß der thermische Grenzwert des Generators nicht überschritten wird, üblich sind etwa 2,6.

Kurve B zeigt den Verlauf des Generatorstroms I_{Gen} über der Generatordrehzahl n_{Gen} für eine Erregerwicklung, deren Widerstand so angepaßt wurde, daß die maximal erlaubte Generatortemperatur nicht überschritten wird.

Kurve C stellt den Verlauf des Generatorstroms über der Generatordrehzahl für eine Erregerwicklung, deren Widerstand kleiner als bei B ist, und z. B. 2,0 beträgt dar. Beim Einsatz einer Erregerwicklung mit einem derartigen Widerstand würde die Generatortemperatur unter ungünstigen Umständen einen zu hohen Wert annehmen, es sind daher geeignete Maßnahmen vorzusehen, die dies verhindern.

Wird eine Erregerwicklung mit verkleinertem Widerstand eingesetzt, muß der Strom durch diese Erregerwicklung dann begrenzt werden, wenn die Gefahr besteht, daß der thermische Grenzwert des Generators überschritten wird, also wenn die gemessene Temperatur den zulässigen Grenzwert erreicht. Besonders bei tiefen Außentemperaturen kann bis zum Erreichen der Grenztemperatur T_{G} ein gesteigerter Generatorstrom I_{Gen}, bzw. Leistungsabgabe erhalten werden. Der zusätzliche Generatorstrom wird durch den schraffierten Bereich dargestellt.

In Figur 2 ist eine Einrichtung dargestellt, mit der eine solche Beeinflussung des Erregerstroms durchgeführt werden kann. Mit 10 ist ein Sensor zur Messung der Regler- bzw. Generatortemperatur bezeichnet. Dabei wird mit dem Sensor 10 vorzugsweise die Temperatur des Reglers gemessen, die Temperaturerfassung kann im Regler selbst erfolgen, da sich im stabilisierten Zustand die Reglertemperatur durch Eigenerwärmung nicht ändert. Die Reglertemperatur ist im übrigen ein Maß für die Außentemperatur. 11 stellt eine Einrichtung zur Messung der Generatordrehzahl dar, und mit 12 ist eine Einrichtung zu Bestimmung des Tastverhältnisses bezeichnet. Mit Tastverhältnis ist dabei das Verhältnis Ein zu Aus der Reglerendstufe gemeint. Gemessen wird dieses Tastverhältnis an der Reglerklemme DF.

13 stellt eine Summationseinrichtung dar, in der die vom Temperatursensor 10, von der Einrichtung zur Drehzahlerfassung 11 und von der Einrichtung zur Bestimmung des Tastverhältnisses 12 gelieferten Signale in geeigneter Weise überlagert werden. Dabei läßt sich aus der Generatordrehzahl und dem Tastverhältnis der Reglerendstufe über geeignete Kennfelder der Generatorstrom ermitteln. Das so erhaltene Summensignal wird einer Pulsdauermodulationsstufe 14 zugeführt, die aus einem Komparator 15 und einem Oszillator 16 besteht. In der

Pulsdauermodulationsstufe 14 wird ein moduliertes Signal erzeugt, das der Reglerendstufe 17 zugeführt wird und das Tastverhältnis der Reglerendstufe und somit den Erregerstrom I_{Err} beeinflußt.

Wesentlich ist, daß mit der in Figur 2 dargestellten Einrichtung eine Beeinflussung des Reglers nur oberhalb einer vorgebbaren kritischen Temperatur erfolgt, da nur dann das dem Komparator 15 zugeführte Summensignal einen vorbestimmten Schwellwert überschreitet. Wird die kritische Temperatur erreicht, wird über das in der Pulsdauermodulationsstufe 14 erzeugte modulierte Signal die Reglerendstufe so beeinflußt, daß ein weiterer Temperaturanstieg infolge eines erhöhten Erregerstromes vermieden wird, d.h. der Erregerstrom wird durch häufigeres Sperren der Reglerendstufe reduziert.

Bei dem in Figur 3 dargestellten Ausführungsbeispiel wird die Erhöhung des Erregerstromes dadurch erreicht, daß zumindest für eine gewisse Zeit eine höhere Spannung an die Erregerwicklungen angelegt wird. Diese höhere Spannung wird dadurch erzeugt, daß der Generator, beispielsweise beim kurzfristigen Betrieb einer elektrischen Heizscheibe, mit freilaufender Spannung betrieben wird. Die beim Betrieb mit freilaufender Spannung an der Generatorklemme B+ anstehende höhere Spannung wird dabei über eine geeignete Schaltungsanordnung direkt der Erregerwicklung zugeführt.

Die Schaltungsanordnung nach Figur 3 zeigt dabei im einzelnen: Einen Generator 18, der über die Gleichrichterbrücke 19 einerseits mit Masse und andererseits über die Klemme B+ mit einem herkömmlichen Bordnetz mit nicht dargestellten Verbrauchern und einer ebenfalls nicht dargestellten Batterie verbunden ist. Dabei erfolgt die Verbindung zwischen B+ und den Verbrauchern über eine Schalter 20.

Der Generator 18 ist weiterhin über die Erregergleichrichter 21 und einen weiteren Schalter 22 sowie eine Diode 23 mit der Erregerwicklung 24 verbunden. Die Erregerwicklung 24 ist ihrerseits über den Endstufentransistor 25 des Spannungsreglers 26 mit Masse verbunden. Ein weiterer Anschluß des Spannungsreglers 26 ist über Schalter 22 mit den Erregerstromgleichrichtern 21 verbunden.

Mit 27 ist eine elektrische Heizscheibe bezeichnet, diese kann über den Schalter 20 an die Klemme B+ gelegt werden. Ein weiterer Strompfad führt über den Widerstand 28 und die Diode 29 zur Erregerwicklung 24. Dieser Strompfad kann ebenfalls über den Schalter 20 und die Klemme B+ gelegt werden. Ein weiterer Pfad führt schließlich über den Widerstand 30 und einen weiteren Schalter 31 zum Regler 26, derselbe Anschluß des Reglers 26 kann in der anderen Schalterstellung des Schalters 31 mit dem Bordnetz und über eine weitere Diode 32 mit dem Schalter 22 verbunden werden, wobei die Anode der Diode 32 direkt mit dem Bordnetz verbunden ist.

Im Normalbetrieb, wenn an der Erregerwicklung die übliche Bordnetzspanung von 12 V liegt, ist die Schalterstellung so wie in Figur 3 bezeichnet. Dabei wird über den Schalter 20 das Bordnetz versorgt, über Schalter 22 wird der Erregerstrom I_{Err} der Erregerwicklung 24 zugeführt, und über Schalter 31 ist der Spannungsregler 26 mit dem Bordnetz verbunden. Wird dagegen umgeschaltet auf gesteigerte Leistung, ist die Klemme B+ über den Schalter 20 mit den Widerständen 28 und 30 sowie mit der Heizscheibe 27 verbunden. Über den umgeschalteten Schalter 31 ist der Regler 26 mit B+ verbunden, über den Widerstand 28 und die Diode 29 liegt die Erregerwicklung 24 ebenfalls an B+, die Gleichrichterbrücke 21 wird durch den Schalter 22 von der Erregerwicklung 24 abgetrennt.

In diesem Schaltzustand wird der Generator 18 mit freilaufender Spannung betrieben, an der Klemme B+ entsteht daher eine höhere Spannung als die Bordnetzspannung, diese höhere Spannung wird über Widerstand 28 und Diode 29 an die Erreger 24 angelegt. Da im genannten Betriebszustand der Generator zu heiß werden könnte, muß dafür gesorgt werden, daß dieser Betriebszustand entweder nur für eine relativ kurze Zeitdauer von einigen Minuten bestehenbleiben kann oder daß eine Schaltungsanordnung ähnlich der aus Figur 2 bekannten Schaltungsanordnung eine Begrenzung des Erregerstromes vornimmt, wenn die Temperatur des Reglers beziehungsweise des Generators zu hoch wird. Ein Zeitschaltglied bzw. die Schaltungsanordnung zur Begrenzung des Erregerstromes ist dabei vorzugsweise im Spannungsregler 26 enthalten.

Üblicherweise besteht der gesteigerte Leistungsbedarf während der Heizphase in Heizscheibe 27. Über einen weiteren Schalter 33 kann die Heizscheibe 27 jedoch abgetrennt werden, so daß dann ein leistungsgesteigerter Betrieb mit freilaufender Spannung möglich ist, ohne daß die Heizscheibe 27 eingeschaltet wird.

Die Diode 32 kann an dieser Stelle entfallen, wenn das gesamte Versorgungsteil für höhere Spannungen, beispielsweise 20 Volt, ausgelegt ist. Sie kann dann außerhalb des Generators angebracht werden.

In Figur 4 ist ein Ausführungsbeispiel dargestellt, bei dem der erhöhte Erregerstrom ebenfalls durch Anlegung einer höheren Spannung als die Bordnetzspannung an die Erregerwicklung 24 erreicht wird. In diesem Fall wird die höhere Spannung mit Hilfe eines Transformators 34 erhalten. Ein solcher Aufwand lohnt sich haupsächlich dann, wenn für eine elektrische Heizscheibe ohnehin eine gegenüber der Bordnetzspannung erhöhte Spannung erforderlich ist.

Im einzelnen zeigt Figur 4 wiederum einen Generator 18, der über eine Gleichrichterbrücke 19 mit der Klemme B+ mit dem Bordnetz verbunden ist, wobei die andere Seite der Gleichrichterbrücke 19 mit Masse verbunden ist. Über Erregerdioden 21 und eine Diode 23 ist die Erregerwicklung 24 mit der Reglerendstufe 25 verbunden. Die Reglerendstufe 25 ist wiederum mit Masse und mit dem Regler 26 verbunden, wobei der Regler 26 zusätzlich an den Erregerdioden 21 liegt.

Über ein Relais 35 sind die Wicklungen des Transformators 34 an den Generator 18 anlegbar. Diese Wicklungen 34A, 34B, 34C sind über ein weiteres Gleichrichtersystem 36 mit der Heizscheibe 27 verbunden. Weitere Abgriffe der Transformatorwicklungen 34A, 34B und 34C führen über die Dioden 37, 38 und 39 direkt auf die Erregerwicklung 24. Im Normalbetrieb sind die Kontakte des Relais 35 geöffnet und die Erregerwicklung 24 wird mit der vom Generator gelieferten üblichen Spannung betrieben.

Wird, beispielsweise beim Betrieb der Heizscheibe 27, eine gesteigerte Leistung des Generators erforderlich, wird bei angezogenem Relais 35 im Transformator 34, der auch durch einen passenden Spannungswandler ersetzt werden könnte, eine höhere Spannung erzeugt, die die Heizscheibe mit Energie versorgt. Gleichzeitig wird über die Dioden 37, 38 und 39 eine gegenüber der Bordnetzspannung erhöhte Spannung an die Erregerwicklung 24 angelegt, so daß der Strom durch die Erregerwicklung 24 einen gegenüber dem Nennerregerstrom erhöhten Wert annimmt. Da in diesem Fall die Gefahr der thermischen Überlastung besteht, muß dafür gesorgt werden, daß das Relais nur für eine vorbestimmbare Zeit von beispielsweise einigen Minuten im angezogenen Zustand verbleiben kann, es kann jedoch auch mit einer Anordnung nach Figur 2, die beispielsweise im Spannungsregler 26 enthalten ist, dafür gesorgt werden, daß der Erregerstrom I_{Err} bei Erreichen einer kritischen Temperatur trotz erhöhter Spannung über eine Veränderung des Tastverhältnisses des Spannungsreglers zurückgenommen wird. Dadurch wird eine thermische Überlastung des Reglers beziehungsweise Generators vermieden.

Das Relais 35 kann selbst eine Zeitschaltung enthalten, die ein Öffnen der Kontakte nach einer vorbestimmbaren Zeit auslöst, es kann aber auch vom Spannungsregler 26 über eine in Figur 4 gestrichelt eingezeichnete Verbindung angesteuert werden, wobei ein Öffnen dann erzwungen wird, wenn die im Regler 26 gemessene Temperatur einen Grenzwert übersteigt.

Kann die Heizscheibe 27 über einen weiteren Schalter 33 vom Transformator 34 abgekoppelt werden, ist eine Leistungssteigerung des Generators auch ohne gleichzeitigen Heizbetrieb möglich.

Wird ein Spannungsregler 26 mit Batteriesensing eingesetzt, wird also die Batteriespannung dem Regler 26 über die in Figur 4 gestrichelt dargestellte Leitung zugeführt, kann die Diode 23 entfallen, die Erregerwicklung 24 wird dann über die ebenfalls gestrichelt dargestellte Verbindung mit den Erregerdioden 21 verbunden.

Eine Generator-/ Spannungsregleranordnung, bei der eine Erhöhung des Erregerstromes I_{Err} über den Nennerregerstrom nicht vorgesehen ist und die dennoch gegenüber herkömmlichen Systemen verbessert ist, kann dadurch erhalten werden, daß zwar eine herkömmliche Anordnung verwendet wird, die Dimensionierung der einzelnen Bauelemente jedoch so gewählt wird, daß unter ungünstigen Umständen eine Überhitzung auftreten könnte.

Um dies zu verhindern wird der Erregerstrom I_{Err} abgesenkt, wenn der Spannungsregler erkennt, daß die Temperatur an einer Stelle des Systems auf einen unzuläßigen Wert steigt.

In Figur 5 ist eine solche Generator-/ Spannungsregleranordnung dargestellt, dabei bezeichnet 18 einen Drehstrom-Generator, der ein Bordnetz 40 mit Energie versorgt. Die Regelung der Generatorausgangsspannung erfolgt mit einem Spannungsregler 26, der über den Bürstenhalter 41 mit dem Drehstrom-Generator 18 verbunden ist. Der Generator 18, mit den Klemmen D+, B+, DF und D-, das Bordnetz 40, sowie der Bürstenhalter 41 sind in üblicher Weise aufgebaut und sollen an dieser Stelle nicht näher beschrieben werden, lediglich die Ladekontrollampe 46, der Anlasser 50 und die Batterie 51, die zwischen dem Generator und Masse liegen, sollen noch erwähnt werden.

Der Spannungsregler 26 mit den Ausgangsklemmen D+, DF und Denthält in üblicher Weise ein Schaltelement, beispielsweise einen Schalttransistor 25 mit einer parallel gaschalteten Diode 42, die zwischen die Reglerklemmen DF und Dgeschaltet ist sowie eine Freilaufdiode 43, die zwischen DF und B+ liegt.

Weiterhin enthält der Spannungsregler eine nicht näher dargestellte Schaltungsanordnung 44, die zwischen die Klemmen D+, DF und Dsowie an die Basis des Transistors 25 sowie seinen Kollektor angeschlossen ist.

Die Schaltungsanordnung 44 enthält einen Temperaturmeßkreis 45, der die Temperatur des Spannungsreglers 26 mißt, die Schaltungsanordnung 44 umfaßt außerdem noch weitere Zusatzeinrichtungen, beispielsweise zur Fehleranzeige, diese kann gegebenenfalls auch über die Ladekontrollampe 46 erfolgen.

Falls die Batterietemperatur gemessen wird, kann diese Information ebenfalls der Schaltungsanordnung 44 zugeführt werden, ebenfalls die Generatordrehzahl sowie beliebige andere Meßdaten.

Die Schaltungsanordnung 44 des Spannungsreglers 26 kann auch als Mikroprozessor oder Mikrocomputer ausgeführt sein, wobei dann in die- sem Mikroprozessor die erforderlichen Berechnungen sowie Soll-/Ist-Wert Vergleiche ablaufen, unter Berücksichtigung von gemessenen Größen wie beispielsweise Reglertemperatur sowie unter Berücksichtigung von im Mikroprozessor abgespeicherten Kennwerten.

Als Kennwerte sind abgespeichert: Kennwerte des Generators, des Spannungsreglers, des Fahrzeugs sowie einbauspezifische Kennwerte. Weiterhin sind Grenztemperaturen T_{G}, bis zu denen die Erhitzung maximal zuläßig ist abgespeichert. Diese Grenztemperaturen können für das Gesamtsystem einheitlich festgelegt sein oder es kann festgelegt werden, daß unterschiedliche Stellen bis zu unterschiedlichen Grenztemperaturen erwärmt werden dürfen.

Die Funktionsweise der Generator-/ Spannungsregleranordnung nach Fig. 5 soll anhand Fig. 6 erläutert werden.

In Fig 6 ist der Generatorstom I_{Gen}, der Erregerstrom I_{Err} sowie die Temperatur T über der Generatordrehzahl n aufgetragen. In einem Drehzahlbereich zwischen n₁ und n₂ kann bei hoher Umgebungstemperatur die Generatortemperatur aber auch die Temperatur an einer anderen Stelle der Generator-/ Regleranordnung einen als zuläßig erachteten Wert von T_{G} überschreiten, wenn keine geeigneten Maßnahmen ergriffen werden. Der gestrichelte Teil von Fig. 6 zeigt den zugehörigen, unerwünschten Verlauf.

In der Schaltungsanordnung 44 bzw. entsprechend im Mikroprozessor wird laufend aus der vorliegenden Reglertemperatur, den abgespeicherten Kennwerten sowie gegebenenfalls zusätzlich gemessenen Größen, beispielsweise Generatordrehzahl n, berechnet, wie hoch die gerade herrschende Temperatur an vorgebbaren Stellen der Generator-/Spannungsregleranordnung ist.

Dabei werden laufend die stationären Endtemperaturen für die Komponenten des Generator-Regler-Systems, die geschützt werden sollen, bzw. besonders warm werden, ermittelt, und aus diesen Größen werden die an den einzelnen Komponenten herrschenden Augenblickstemperaturen ermittelt oder es werden die zu erwartenden zeitlichen Verläufe der Temperaturen nachgebildet und daraus die entsprechenden gerade herrschenden Augenblickstemperaturen abgeleitet.

Ein Vergleich mit den vorgebbaren Grenztemperaturen für die betreffenden Komponenten zeigt sofort, ob die Gefahr besteht, daß irgend eine dieser Grenztemperaturen erreicht wird. Falls dies zutrifft, werden die beschriebenen Maßnahmen zur Verringerung der Erregung des Generators eingeleitet.

Mit stationären Endtemperaturen sind die Temperaturen gemeint, die sich nach einer Zeit von ca. 5T (T=Zeitkonstante) einstellen würden, wenn die zu Beginn der jeweiligen Berechnung herrschenden Bedingungen (eingestellter Betriebszustand) sich nicht ändern würden. Die Ermittlung der stationären Endtemperaturen erfolgt in Abhängigkeit von folgenden Generatorkomponenten:
Generatordrehzahl
Tastverhältnis bzw. Erreger- bzw. Laststrom
Reglertemperatur
Generatorspannung

Weitere Komponenten können verwertet werden, es können auch nur einzelne der obengenannten Größen zur Ermittlung der stationären Endtemperatur herangezogen werden.

In Figur 7a bis d sind Strom- und Temperaturverläufe über der Zeit t aufgetragen die den weiteren Sachverhalt verdeutlichen sollen. Dabei ist in Figur 7a der Stromverlauf aufgetragen bei Zuschaltung einer Last, wobei einmal (untere Kurve) ein Betriebszustand vorliegt, der zu einem zuläßigen Maximalstrom I zul führt und einmal (obere Kurve) einer, der zu einer thermischen Überlastung führen könnte I Gen.

In Figur 7c sind durchgehend die zugehörigen Temperaturverläufe aufgetragen (unten zuläßig T zul, oben unzuläßig T), die gepunkteten Linien stellen die jeweils zugehörigen ermittelten (berechneten) stationären Endtemperaturen dar.

In Figur 7d sind die in Figur 7c dargestellten Temperaturverläufe erneut aufgetragen, es ist weiterhin dargestellt, wie der Temperaturverlauf ist, wenn der Generator bis zur Zeit tl im Übererregten Zustand betrieben wird und danach, infolge des Erreichens der Grenztemperatur TG herruntergeregelt wird, so daß diese Grenztemperatur nicht überschritten wird. Der so erhaltene zusätzliche Strom ist in Figur 7b schraffierte dargestellt, die zuläßige thermische Mehrbelastung ist in Figur 7d schraffiert dargestellt. Gepunktet ist der Verlauf der ständig neu bestimmten stationären Endtemperatur dargestellt, die nach tl auf TG gehalten wird.

Zur Ermittlung des Verlaufs der Temperatur aus der oder den bestimmten stationären Grenztemperaturen sind die folgenden Methoden einsetzbar:
1. Es wird die Erwärmung eines Widerstandes mit einem meßbaren TK-Wert, also eines temperaturabhängigen Widerstandes (NTC, PTC) ausgewertet, der beispielsweise im Regler eingesetzt ist. Entsprechend der ermittelten stationären Endtemperatur wenigstens einer Komponente, die abhängig ist von der Leistung wird aus der Erwärmung dieses Widerstandes der der aktuelle Temperaturverlauf nachgebildet, wobei dazu die Widerstandsänderung oder die Temperatur des Widerstandes ausgewertet wird.
2. Es wird die Erwärmung einer Halbleiterstrecke, beispielsweise einer Zenerdiode ausgewertet unter Berücksichtigung des linearen Zusammenhangs zwischen Der Leistung P, der Spannung U und dem Strom I.
3. Es wird die thermische Kopplung zwischen Ständer und Läufer ausgenutzt. Bei einer bestimmten Temperatur kann jedem Tastverhältnis genau ein Erregerstrom zugeordnet werden. In Abhängigkeit von der Temperatur ändert sich diese Zuordnung, damit kann aus der Kombination der Werte des Erregerstromes und des Tastverhältnisses eine Aussage über die mittlere Temperatur zu jedem beliebigen Zeitpunkt gemacht werden. Da bei diesem Verfahren ausschließlich Größen benötigt werden, die im Regler ohnehin schon zu Verfügung stehen, ist es besonders günstig.
4. Es wird die Tatsache ausgenutzt, daß im Ständer des Generators unterschiedliche Kühllufttemperaturen herrschen, diese jedoch unter Berücksichtigung von vorliegenden thermischen Verhältnissen abgeschätzt werden können. Verdeutlicht werden die Zusammenhänge mittels der in Figur 8 skizzierten Verhältnisse.

In Figur 8 ist der Ständer 52 eines Generators skizziert, in dessen Innerem sich der Läufer 55 befindet, der über eine Welle 54, auf der die Keilriemenscheibe 53 sitzt, mit den Lüftern 57a, 57b verbunden ist. Der Spannungsregler 26 ist im Innern des Generators angeordnet, auf der von der Seite A entfernten Seite. Über einen Schlauch 56 wird dem Ständerinneren Kühlluft zugeführt, wie auch über die Lüfter 57a, 57b, wobei systembedingt die Luft auf der Seite A nicht dieselbe Temperatur haben muß wie die Luft auf Seite B, denn die Luft auf der A-Seite wird direkt aus dem Motorraum angesaugt, während die auf der B-Seite entweder aus dem Motorraum oder über einen Schlauch von ausserhalb kommen kann.

Die Temperatur der Luft auf der Seite B kann direkt aus der gemessenen Reglertemperatur bestimmt werden, während dies für die Temperatur auf der Seite A nicht ohne weiteres möglich ist. Es wird daher im Regler die Temperatur des Läufers berechnet und mit der mittleren Temperatur verglichen, als Verfahren wird beispielsweise das unter 3. beschriebene verwendet. Aus der sich ergebenden Differenz und der thermischen Kopplung zwischen Läufer und zu schützender Komponente wird auf die Temperatur der Luft auf Seite A geschlossen.

Durch die in den Methoden 3 und 4 beschriebenen Vorgehensweisen ist es möglkich, direkt auf die tatsächliche Temperatur einer zu schützenden Komponente zu schließen und über geeignete Maßnahmen einer Überhitzung entgegenzuwirken.

Überschreitet eine solche, berechnete Temperatur einen oder unterschiedliche vorgegebene Grenztemperaturen, wird der Erregerstrom durch Ansteuerung des Schalttransistors 25 verringert, wodurch die Temperatur den oder die gewählten Grenzwerte nicht überschreitet. Sinkt die Temperatur wieder weiter ab, weil sich entweder die Außentemperatur verringert hat oder die Generatordrehzahl gesteigert wurde, erhöht der Spannungsregler den Erregerstrom wieder auf seinen normalen Wert.

Die beschriebene Messung der Temperaturen am Spannungsregler, die ohne große Schwierigkeiten bzw. ohne großen Aufwand möglich ist und die aus dieser gemessenen Temperatur berechneten Temperaturen an anderer Stelle des Systems entsprechen einer sogenannten Beobachter-Funktion, die eine in der Regelungstechnik bekannte Maßnahme darstellen.

Die durchgezogenen Linien der Fig. 6 zeigen die Strombzw. Temperaturverläufe bei einer erfindungsgemäßen Erregerstromabsenkung bei zu hohen Temperaturen.

Solange der Erregerstrom abgesenkt ist erfolgt eine Anzeige, beispielsweise über die Ladekontrollampe, die Auslösung der Anzeige erfolgt mittels des Spannungsreglers 26 bzw. des Mikroprozessors 44.

Bei der Generator-/ Spannungsregleranordnung nach Fig. 5 sind die Generatorbauteile so ausgelegt, daß im ungünstigsten Fall zu hohe Temperaturen auftreten könnten, dabei kann beispielsweise der Querschnitt der Wicklungen kleiner als üblich gewählt sein oder die Dimensionierung des Kühllüfters verringert sein oder die Ausgestaltung der Kühlelemente vereinfacht sein, wodurch insgesamt Material und Gewichtseinsparungen möglich sind.

Die beschriebenen Möglichkeiten der Bestimmung der verschiedenen Temperaturen sind auch bei herkömmlichen Generator-Spannungsregler-Systemen zusätzlich einsetzbar, falls ein solcher Bedarf besteht, es ist dabei möglich, aus der gemessenen Reglertemperatur die zur optimalen Batterieladung benötigte Generatorausgangsspannung abzuleiten.

Die Einrichtungen der Figuren 2-5 sind selbstverständlich miteinander kombinierbar, so daß auch für die Einrichtungen nach Fig. 3, 4 eine Temperturberechnung mittels eines Mikroprozessors erfolgen kann, unter Berücksichtigung von abgespeicherten Kennwerten oder Meßwerten. Die Temperaturermittlung über die stationären Endtemperaturen, gegebenenfalls mit Hilfe der in Figur 7 skizzierten Anordnung ist ebenfalls bei allen obengenannten Ausführungsbeispiele möglich. Ebenso kann auch bei diesen Einrichtungen eine Anzeige erfolgen, wenn der Erregerstrom abgesenkt wird.

## Patentansprüche

1. Vorrichtung zur Regelung eines Generators mit einer Erregerwicklung und einem Spannungsregler, der durch Beeinflussung des Erregerstromes des Generators dessen Ausgangsspannung regelt und Mittel zur Messung der Reglertemperatur aufweist, wobei der Spannungsregler oder weitere Mittel zur Beeinflussung des Erregerstromes (I_{Err}) bei Erreichen wenigstens einer Grenztemperatur (T_{G}) oder eines Grenztemperaturbereiches den Erregerstrom (I_{Err}) absenken, wobei eine Schaltungsanordnung (44) vorgesehen ist, die unter Berücksichtigung der gemessenen Reglertemperatur eine, sich im stationären Betrieb einstellende Endtemperatur (T) wenigstens einer vorgebbaren Komponente der Vorrichtung bestimmt und in Abhängigkeit von dieser Endtemperatur (T) den zeitlichen Temperaturverlauf ermittelt und/oder die aktuelle Temperatur der betreffenden Komponete ermittelt und mit der Grenztemperatur (TG) vergleicht.

2. Vorrichtung nach Anspruch 1, dadurch gekennzeichnet, daß ein Generator eingesetzt wird, der so ausgelegt ist, daß bei starker Belastung und/oder hohen Außentemperaturen insbesondere bei geringer Generatordrehzahl eine unerlaubte Grenztemperatur (T_{G}) am Generator oder der Vorrichtung selbst auftreten kann.

3. Vorrichtung nach Anspruch 1 oder 2, dadurch gekennzeichnet, daß die Schaltungsanordnung (44) eine Recheneinrichtung umfaßt, in der die erforderlichen Berechnungen ablaufen, mit denen in Abhängigkeit von abgespeicherten und/oder gemessenen Größen wenigstens eine stationäre Endtemperatur (T) ermittelt wird.

4. Vorrichtung nach einem der vorhergehenden Ansprüche, dadurch gekennzeichnet, daß aus der stationären Endtemperatur die Augenblickstemperatur und/oder der zeitliche Verlauf der Temperatur ermittelt wird, zur Erkennung, ob die Grenztemperatur erreicht ist.

5. Vorrichtung nach einem der vorhergehenden Ansprüche, dadurch gekennzeichnet, daß der Wert des Widerstandes der Erregerwicklung (24) kleiner ist, als ein Wert, der auch im ungünstigsten Fall zu keiner thermischen Überlastung des Generators (18) oder des Reglers (26) führt.

6. Vorrichtung nach einem der Ansprüche 2 bis 5, dadurch gekennzeichnet, daß zur Erhöhung der Leistung des Generators (18) eine gegenüber der Ausgangsspannung des Generators (18) erhöhte Spannung erzeugt wird, die der Erregerwicklung (24) zugeführt werden kann.

7. Vorrichtung nach einem der Ansprüche 2 bis 5, dadurch gekennzeichnet, daß die Mittel, die den Erregerstrom absenken, eine Pulsdauermodulationsstufe (14) umfassen, die einen Komparator (15) und einen Oszillator (16) aufweist und das Tastverhältnis des Reglers (17) beeinflußt.

8. Vorrichtung nach Anspruch 7, dadurch gekennzeichnet, daß aus der Temperatur des Reglers, der Drehzahl des Generators und dem Tastverhältnis des Reglers ein Summensignal gebildet wird, das der Pulsdauermodulationsstufe (14) als Eingangssignal zugeführt wird.

9. Vorrichtung nach Anspruch 8, dadurch gekennzeichnet, daß die Pulsdauermodulationsstufe (14) nur dann ein Ausgangssignal liefert, wenn das Summensignal einen Schwellwert des Komparators (15) übersteigt.

10. Vorrichtung nach einem der vorhergehenden Ansprüche, dadurch gekennzeichnet, daß zur Erzeugung einer gegenüber der Bordnetzspannung erhöhten Spannung der Generator (16) mit freilaufender Spannung betrieben wird.

11. Vorrichtung nach einem der vorhergehenden Ansprüche, dadurch gekennzeichnet, daß die gegenüber der Bordnetzspannung erhöhte Spannung mit Hilfe eines Transformators (34) oder eines geeigneten Spannungswandlers erzeugt wird.

12. Vorrichtung nach einem der vorhergehenden Ansprüche, dadurch gekennzeichnet, daß eine Anzeige erfolgt, wenn die Grenztemperatur erreicht wird und/oder der Erregerstrom (I_{Err}) abgesenkt wird.

13. Vorrichtung nach einem der vorherigen Ansprüche, dadurch gekennzeichnet, daß eine Anzeige erfolgt, wenn die Grenztemperatur erreicht wird und/oder der Erregerstrom (I_{Err}) abgesenkt wird.

14. Vorrichtung nach einem der vorhergehenden Ansprüche, dadurch gekennzeichnet, daß die Mittel zur Beeinflussung des Erregerstromes (I_{Err}) Kennwerte des Generators, und/oder Kennwerte des Spannungsreglers und/oder des Fahrzeugs und/oder einbauspezifische, abgespeicherte Kennwerte zur Berechnung der Temperatur an vorgebbaren Stellen der Vorrichtung verwertet.

15. Vorrichtung nach Anspruch 13, dadurch gekennzeichnet, daß die Drehzahl des Generators bei der Berechnung der Temperatur an vorgebbaren Stellen mitberücksichtigt wird.

16. Vorrichtung nach einem der vorhergehenden Ansprüche, dadurch gekennzeichnet, daß die Grenztemperatur (T_{G}) die Temperatur ist, bei der noch keine Fehlfunktionen zu erwarten sind und für unterschiedliche Stellen der Vorrichtung verschiedene Grenztemperaturen festgelegt werden.

17. Vorrichtung nach einem der vorhergehenden Ansprüche 14 bis 16, dadurch gekennzeichnet, daß in der Recheneinrichtung aus der Temperatur des Spannungsreglers die Temperatur an anderer, auswählbarer Stelle des Systems errechnet wird.

18. Vorrichtung nach Anspruch 17, dadurch gekennzeichnet, daß die Temperaturbestimmung mittels einer Beobachter-Funktion erfolgt.

19. Vorrichtung nach einem der Ansprüche 4 bis 18, dadurch gekennzeichnet, daß der zeitliche Verlauf der Temperatur durch Auswertung der Widerstandsänderung oder der Temperatur eines temperaturabhängigen Widerstandes in Abhängigkeit vom ermittelten stationären Endwert der Temperatur gebildet wird.

20. Vorrichtung nach einem der Ansprüche 4 bis 18, dadurch gekennzeichnet, daß der zeitliche Verlauf der Temperatur durch Auswertung der Erwärmung einer Halbleiterstrecke, insbesondere einer Zenerdiode in Abhängigkeit vom ermittelten stationären Endwert der Temperatur gebildet wird.

21. Vorrichtung nach einem der Ansprüche 4 bis 18, dadurch gekennzeichnet, daß der zeitliche Verlauf der Temperatur durch Auswertung der thermischen Kopplung zwischen Läufer und Ständer des Generators gebildet wird.

22. Vorrichtung nach einem der vorgehenden Ansprüche, dadurch gekennzeichnet, daß der Temperaturverlauf für verschiedene Komponenten ermittelt wird.

## Claims

1. Device for regulating a generator, having an excitation winding and a voltage regulator which by influencing the excitation current of the generator regulates the output voltage thereof and has means for measuring the regulator temperature, the voltage regulator or other means for influencing the excitation current (I_{Err}) lowering the excitation current (I_{Err}) upon reaching at least a limiting temperature (T_{G}) or a limiting temperature range, a circuit arrangement (44) being provided which, taking account of the measured regulator temperature, determines a final temperature (T), set up in steady-state operation, of at least one prescribable component of the device, and, as a function of this final temperature (T), determines the temporal temperature characteristic and/or determines the current temperature of the relevant component and compares it with the limiting temperature (TG).

2. Device according to Claim 1, characterized in that a generator is used which is designed such that an impermissible limiting temperature (T_{G}) can occur at the generator or the device itself in the case of severe loading and/or high outside temperatures, particularly given a low generator speed.

3. Device according to Claim 1 or 2, characterized in that the circuit arrangement (44) comprises an arithmetic unit in which the necessary calculations are carried out by means of which at least one steady-state final temperature (T) is determined as a function of stored and/or measured variables.

4. Device according to one of the preceding claims, characterized in that the instantaneous temperature and/or the temporal characteristic of the temperature is determined from the steady-state final temperature in order to detect whether the limiting temperature has been reached.

5. Device according to one of the preceding claims, characterized in that the value of the resistance of the excitation winding (24) is smaller than a value which does not lead to thermal overloading of the generator (18) or of the regulator (26) even in the most unfavourable case.

6. Device according to one of Claims 2 to 5, characterized in that in order to increase the power of the generator (18) a voltage is generated which is higher than the output voltage of the generator (18) and can be fed to the excitation winding (24).

7. Device according to one of Claims 2 to 5, characterized in that the means which lower the excitation current comprise a pulse-duration modulation stage (14) which has a comparator (15) and an oscillator (16) and which influences the pulse duty factor of the regulator (17).

8. Device according to Claim 7, characterized in that there is formed from the temperature of the regulator, the speed of the generator and the pulse duty factor of the regulator an aggregate signal which is fed as input signal to the pulse-duration modulation stage (14).

9. Device according to Claim 8, characterized in that the pulse-duration modulation stage (14) delivers an output signal only if the aggregate signal exceeds a threshold value of the comparator (15).

10. Device according to one of the preceding claims, characterized in that the generator (16) is operated with free-running voltage in order to generate a voltage of the generator (16) which is higher than the vehicle electrical system voltage.

11. Device according to one of the preceding claims, characterized in that the voltage which is higher than the vehicle electrical system voltage is generated with the aid of a transformer (34) or of a suitable voltage transformer.

12. Device according to one of the preceding claims, characterized in that a display is made when the limiting temperature is reached and/or the excitation current (I_{Err}) is lowered.

13. Device according to one of the preceding claims, characterized in that a display is made when the limiting temperature is reached and/or the excitation current (I_{Err}) is lowered.

14. Device according to one of the preceding claims, characterized in that the means for influencing the excitation current (I_{Err}) uses characteristic values of the generator, and/or characteristic values of the voltage regulator and/or of the vehicle and/or stored characteristic values which are installation-specific in order to calculate the temperature at prescribable points of the device.

15. Device according to Claim 13, characterized in that the speed of the generator is also taken into account when calculating the temperature at prescribable points.

16. Device according to one of the preceding claims, characterized in that the limiting temperature (T_{G}) is the temperature at which no malfunctions are still to be expected, and different limiting temperatures are fixed for different points of the device.

17. Device according to one of the preceding Claims 14 to 16, characterized in that the temperature at another, selectable point of the system is calculated in the arithmetic unit from the temperature of the voltage regulator.

18. Device according to Claim 17, characterized in that the temperature is determined by means of an observer function.

19. Device according to one of Claims 4 to 18, characterized in that the temporal temperature characteristic is formed by evaluating the change in resistance or the temperature of a temperature-dependent resistor as a function of the steady-state final temperature value determined.

20. Device according to one of Claims 4 to 18, characterized in that the temporal temperature characteristic is formed by evaluating the heating of a semiconductor section, in particular a zener diode, as a function of the steady-state final temperature value determined.

21. Device according to one of Claims 4 to 18, characterized in that the temporal temperature characteristic is formed by evaluating the thermal coupling between the rotor and stator of the generator.

22. Device according to one of the preceding claims, characterized in that the temperature characteristic is determined for different components.

## Revendications

1. Dispositif de régulation d'un générateur,
comprenant
un enroulement d'excitation et un régulateur de tension qui règlent la tension de sortie du générateur en influençant son courant d'excitation, ainsi que des moyens pour mesurer la température du régulateur, le régulateur de tension ou d'autres moyens influençant le courant d'excitation (I_{Err}) lorsqu'on atteint au moins une température limite (T_{G}) ou une plage de températures limites, en diminuant le courant d'excitation (I_{Err}), un circuit (44) étant prévu qui, en tenant compte de la température mesurée du régulateur, définit une température finale (T) qui se règle en mode de fonctionnement stationnaire sur au moins un composant prédéterminé du dispositif et, en fonction de cette température finale (T), il détermine le profil de température dans le temps et/ou la température instantanée des composants concernés et il compare à la température limite (T_{G}).

2. Dispositif selon la revendication 1,
caractérisé en ce qu'
il utilise un générateur conçu pour qu'en cas de fortes charges et/ou de températures extérieures élevées, notamment pour un générateur tournant à une faible vitesse de rotation, on ne puisse atteindre une température limite (T_{G}) non autorisée sur le générateur ou le dispositif lui-même.

3. Dispositif selon la revendication 1 ou 2,
caractérisé en ce que
le circuit (44) comprend une installation de calcul qui effectue les calculs nécessaires à l'aide desquels, en fonction des grandeurs mises en mémoire et/ou mesurées, on détermine au moins une température finale stationnaire (T).

4. Dispositif selon l'une des revendications précédentes,
caractérisé en ce qu'
à partir de la température finale stationnaire, on détermine la température instantanée et/ou la courbe de température dans le temps, pour savoir si une température limite est atteinte.

5. Dispositif selon l'une des revendications précédentes,
caractérisé en ce que
la valeur de la résistance de l'enroulement d'excitation (24) est inférieure à une valeur qui ne conduit à aucune surcharge thermique du générateur (18) ou du régulateur (26) même dans le cas le plus défavorable.

6. Dispositif selon l'une des revendications 2 à 5,
caractérisé en ce que
pour augmenter la puissance du générateur (18), on génère une tension plus élevée que la tension de sortie du générateur (18) et qui est appliquée à l'enroulement d'excitation (24).

7. Dispositif selon l'une des revendications 2 à 5,
caractérisé en ce que
les moyens qui abaissent le courant d'excitation comprennent un étage de modulation de durée d'impulsions (14) comprenant un comparateur (15) et un oscillateur (16), et influençant le rapport de travail du régulateur (17).

8. Dispositif selon la revendication 7,
caractérisé en ce qu'
à partir de la température du régulateur, de la vitesse de rotation du générateur et du rapport de travail du régulateur, on forme un signal de somme qui est appliqué à l'état de modulation de durée d'impulsions (14) comme signal d'entrée.

9. Dispositif selon la revendication 8,
caractérisé en ce que
l'étage de modulation de durée d'impulsions (14) ne fournit un signal de sortie que si le signal de somme dépasse un seuil du comparateur (15).

10. Dispositif selon l'une des revendications précédentes,
caractérisé en ce que
pour générer une tension augmentée par rapport à la tension du réseau embarqué, le générateur (16) fonctionne avec une tension libre.

11. Dispositif selon l'une des revendications précédentes,
caractérisé en ce que
la tension augmentée par rapport à la tension du réseau embarqué est créée à l'aide d'un transformateur (34) ou d'un convertisseur de tension, approprié.

12. Dispositif selon l'une quelconque des revendications précédentes,
caractérisé en ce qu'
il y a un affichage lorsqu'on atteint la température limite et/ou on abaisse le courant d'excitation (I_{Err}).

13. Dispositif selon l'une des revendications précédentes,
caractérisé en ce qu'
il y a un affichage lorsqu'on atteint la température limite et/ou on abaisse le courant d'excitation (I_{Err}).

14. Dispositif selon l'une des revendications précédentes,
caractérisé en ce que
les moyens pour influencer le courant d'excitation (I_{Err}) utilisent les caractéristiques du générateur et/ou les caractéristiques du régulateur de tension et/ou celles du véhicule et/ou des caractéristiques spécifiques au montage, mises en mémoire pour calculer la température à des endroits prédéterminés du dispositif.

15. Dispositif selon la revendication 13,
caractérisé en ce que
la vitesse de rotation du générateur est prise en compte pour calculer la température en des endroits prédéterminés.

16. Dispositif selon l'une des revendications précédentes,
caractérisé en ce que
la température limite (T_{G}) est la température pour laquelle on ne peut s'attendre à des défauts de fonctionnement, et des températures limites différentes sont fixées pour des endroits différents du dispositif.

17. Dispositif selon l'une des revendications précédentes 14 à 16,
caractérisé en ce que
l'installation de calcul calcule, à partir de la température du régulateur de tension, celle atteinte en d'autres points choisis du système.

18. Dispositif selon la revendication 17,
caractérisé en ce que
la détermination de la température se fait à l'aide d'une fonction d'observateur.

19. Dispositif selon l'une des revendications 4 à 18,
caractérisé en ce que
la courbe de la température en fonction du temps est obtenue par l'exploitation de la variation de résistance ou de température d'une résistance dépendant de la température, en fonction de la valeur finale stationnaire obtenue pour la température.

20. Dispositif selon l'une des revendications 4 à 18,
caractérisé en ce qu'
on forme la courbe de la température dans le temps par l'exploitation de l'élévation de température d'un chemin semi-conducteur, notamment d'une diode Zener, en fonction de la valeur finale stationnaire déterminée de la température.

21. Dispositif selon l'une des revendications 4 à 18,
caractérisé en ce qu'
on forme la courbe de la température dans le temps en exploitant le couplage thermique entre le rotor et le stator du générateur.

22. Dispositif selon l'une des revendications précédentes,
caractérisé en ce qu'
on détermine la courbe de température pour différents composants.
